# FASCICULE DE BREVET EUROPEEN

(11) **EP 0 609 130 B1**
(45) Date de publication et mention de la délivrance du brevet: **19.03.1997**
(21) Numéro de dépôt: 94400147.8
(22) Date de dépôt: 24.01.1994
(51) Int. Cl.: B60N 2/00

(54) **Siège de véhicule enlevable et réglable en position**
Entfernbarer und positionierbarer Fahrzeugsitz
Removable and adjustable vehicle seat

(30) Priorité: 27.01.1993 FR 9300792
(43) Date de publication de la demande: 03.08.1994
(73) Titulaire: MATRA AUTOMOBILES, 75116 Paris (FR)
(72) Inventeur: Escarguel, Hugues, F-91300 Massy (FR); Faligand, Jacky, F-78120 Rambouillet (FR)
(74) Mandataire: Fort, Jacques

(56) Documents cités:
- EP-A- 0 215 495
- EP-A- 0 283 356
- EP-A- 0 500 412
- FR-A- 2 556 946
- GB-A- 2 008 938

## Description

L'invention concerne les sièges pour véhicule prévus pour être aisément fixés au plancher et enlevables afin de libérer de la place ou de modifier la répartition des sièges dans le véhicule. Elle trouve une application particulièrement importante, bien que non-exclusive, dans la réalisation des sièges de lignes arrière de véhicule de transport de personnes.

On connaît déjà des sièges enlevables dont l'assise est conformes au préambule de la revendication 1 (FR-A-2 536 946).

On connait également (GB-A-2 008 938) un siège comportant une assise munie de pieds avant et de pieds arrière destines à prendre appui sur des éléments d'une glissière. Les pieds sont décrochables des éléments qui peuvent coulisser dans des glissières fixées au plancher.

La présente invention vise notamment à fournir un siège de véhicule enlevable et réglable en position répondant mieux que ceux antérieurement connus aux exigences de la pratique, notamment en ce qu'il n'implique pas de placer sur le siège la totalité des moyens de réglage longitudinal.

Dans ce but l'invention propose notamment un siège suivant la partie caractérisante de la revendication 1.

Les moyens de commande peuvent être constitués par une tringlerie ayant un palonnier accessible sous la partie avant de l'assise et terminée par un actionneur agissant sur les moyens de retenue longitudinale pour les dégager. A condition que le point d'action de l'actionneur soit au milieu de l'intervalle entre les anneaux avant et arrière, le siège peut être retourné, c'est-à-dire monté à l'envers.

Dans un mode particulier de réalisation permettant de basculer le siège vers l'avant (éventuellement après que le dossier ait été rabattu), les moyens de verrouillage des pieds arrière sont désarmables manuellement indépendamment de ceux des pieds avant, de sorte que l'assise peut pivoter autour des anneaux supportant les pieds avant. Pour éviter que les pieds arrière et/ou l'actionneur ne restent en saillie lorsque l'assise est basculée vers l'avant, une tringlerie est avantageusement prévue pour faire automatiquement tourner les pieds arrière et/ou l'actionneur dans un sens qui les escamote au moins partiellement dans l'encombrement de l'assise lors du basculement vers l'avant et qui les ramène en position active lors du retour de l'assise vers sa position d'utilisation normale.

L'invention sera mieux comprise à la lecture de la description qui suit d'un mode particulier de réalisation donné à titre d'exemple non-limitatif. La description se réfère aux dessins qui l'accompagnent, dans lesquels :
- la figure 1 montre les éléments concernés par l'invention d'un siège de véhicule automobile, en coupe suivant le plan longitudinal médian du siège ;
- la figure 2 est une vue partielle de-dessus, les glissières et la partie de l'assise autre que son châssis n'étant pas représentées ;

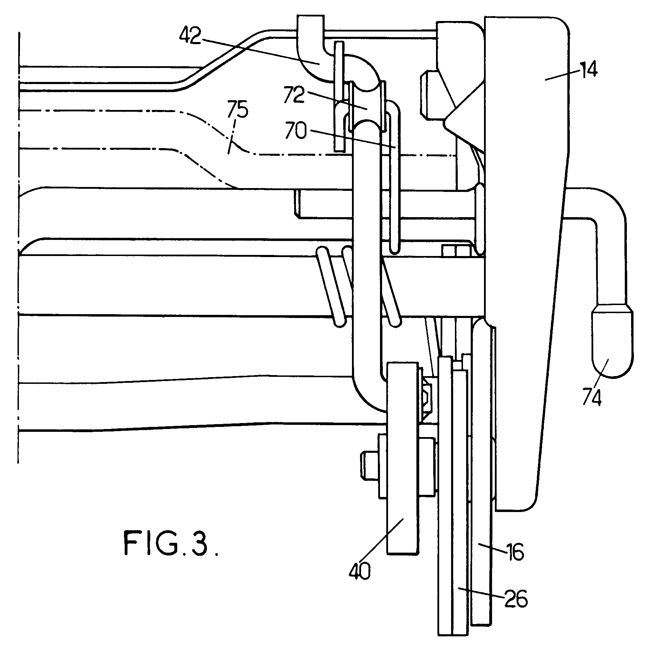

- la figure 3 est une vue partielle depuis la droite de la figure 1 ;
- la figure 4 est une vue en élévation, à grande échelle, montrant une glissière et le tiroir ou coulisseau qu'elle porte ;
- la figure 5 est une demi-coupe transversale, montrant une constitution possible de la glissière et du tiroir ; et
- la figure 6, similaire à la figure 1, montre le siège à l'état basculé.

Le siège dont les parties concernées par l'invention sont montrées sur les figures comporte une assise sur laquelle un dossier (non-représenté) est fixé de façon à pouvoir tourner autour d'un axe entre une position d'utilisation et une position où il est rabattu sur l'assise. Le châssis d'assise représenté comporte des longerons 10 reliés par des traverses 12. Aux traverses sont fixés deux flasques latéraux 14.

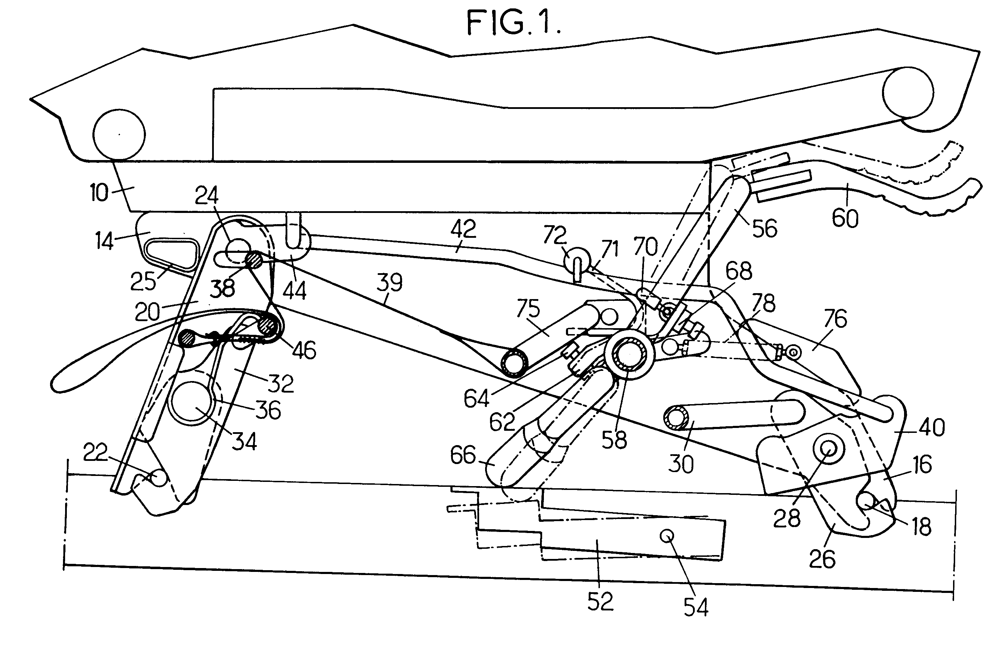

Les pieds avant 16 du mode de réalisation représenté sont constitués par des parties en saillie des flasques 14. Ces pieds ont une forme terminale en fourche leur permettant de reposer sur des anneaux transversaux 18 servant également au verrouillage du siège. Les pieds arrière 20 sont prévus pour reposer sur des anneaux 22 parallèles aux anneaux 18. Ils sont portés par les flasques 14 de façon à pouvoir tourner autour d'axes respectifs 24 alignés entre la position d'utilisation du siège, fixée par des butées 25, où ils sont montrés en figure 1 et une position rétractée, lorsque le siège est basculé. Le passage de la position normale de la figure 1 à la position rétractée est provoquée automatiquement, lors du basculement, par l'action d'une tringlerie qui sera décrite plus loin.

Chacun des pieds est muni d'un verrou interdisant normalement le dégagement du pied. Les verrous 26 des pieds avant tournent sur des axes 28 fixés aux flasques. Ils sont simultanément désarmables manuellement par traction sur une manette 30 placée sous l'assise. Un ressort non-représenté tend à les ramener en position active.

Les verrous arrière 32 tournent, eux, sur des axes 34 portés par les pieds arrières 20. Des ressorts 36 prenant appui sur une barrette 38 tendent à les ramener en position active. Ces verrous sont également désarmables par action sur des moyens qui peuvent avoir diverses constitutions. Dans le cas illustré sur la figure 1, ils comprennent une sangle 39 dont une extrémité est fixée à un palonnier 75 soudé à des manettes 74 placées de part et d'autre du siège. Cette sangle passe sur le palonnier 46 fixé aux pieds, puis sur la barrette 38 à laquelle elle est fixée ; elle se termine par une boucle de traction.

La tringlerie destinée à escamoter les pieds arrières lors du basculement comporte, dans le mode de réalisation illustré, un ou des leviers 40 dont un bras prend appui sur le plancher, directement ou par l'intermédiaire d'une glissière. L'autre bras est relié par une biellette 42 à une patte 44 d'entraînement en rotation des pieds arrière reliés par un palonnier 46. Un ressort en épingle 71 enroulé autour de l'entretoise 58 et terminé par une roulette 72 exerce sur la biellette 42 une force tendant à la déplacer vers le bas, c'est-à-dire à la rapprocher de l'entretoise, et à repousser les pieds arrière vers la position d'utilisation où ils peuvent s'engager sur leurs anneaux 22.

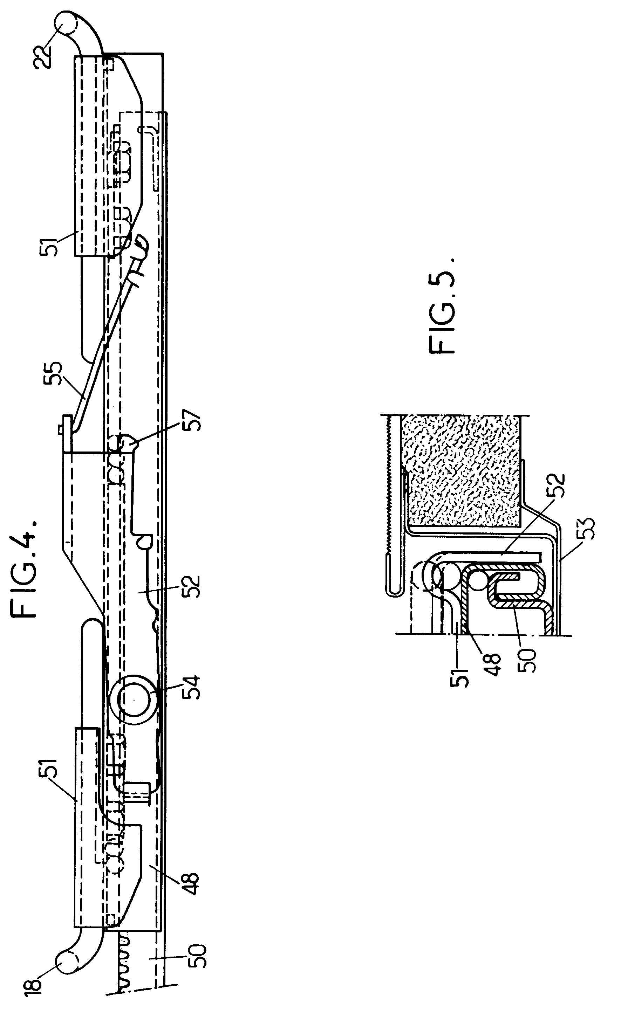

Les anneaux 18 et 22 sont fixés à deux tiroirs 48 déplaçables simultanément dans des glissières 50 fixées au plancher 53 du véhicule (figure 5). La constitution générale de chaque glissière et du tiroir 48 qu'elle contient peut être l'une de celles connues à l'heure actuelle.

Dans le cas illustré sur les figures 4 et 5, la glissière 50 est en forme de gouttière avec des rebords externes rabattus dans lesquels sont découpées des encoches régulièrement réparties . Elle definit un trajet de circulation du tiroir 48, qui repose sur elle par l'intermédiaire de billes. Les anneaux 18 et 22 sont fixés sur le tiroir par des renforts 51 bloqués à l'aide de vis.

Des moyens de retenue permettent d'immobiliser les tiroirs dans des positions déterminées, réparties à des intervalles réguliers définis par les encoches. Les moyens montrés sur les figures 1, 4 et 5 comportent un verrou 52 pouvant tourner sur le tiroir 48 autour d'un axe 54, repoussé par un ressort 55 vers la position où il est représenté en traits pleins sur la figure 1. Ce verrou comporte des crans 57 prévus pour s'engager dans les encoches de la glissière.

Des moyens de commande prévus sur le siège, généralement placés de façon à pouvoir être actionnés par l'occupant du siège, permettent de dégager les verrous 52. Dans le mode de réalisation illustré sur la figure, ils comportent un arceau 56 pouvant tourner sur une entretoise transversale 58 et prolongée vers l'avant par une poignée 60 accessible sous l'assise. Les extrémités 62 de l'arceau prennent appui, par l'intermédiaire de vis de réglage 64 (figure 1) sur un actionneur 66 articulé lui aussi autour de l'entretoise 58. Une butée 68 définit la position de repos de la palette 60, vers laquelle elle est ramenée par un ressort 70.

Pour permettre de retourner le siège, le verrou 52 et l'actionneur 66 sont dimensionnés et placés de façon que le point d'appui de l'actionneur sur une palette supérieure du levier se trouve au milieu de l'intervalle défini par les doigts 18 et 22 : ainsi les moyens de commande sont opérationnels dans les deux orientations du siège.

On décrira maintenant de façon sommaire le mode de mise en action des moyens de déplacement et de repliement du siège représenté.

Pour déplacer le siège vers l'avant ou vers l'arrière, il suffit de tirer sur la poignée 60 pour l'amener dans la position représentée en traits mixtes sur la figure 1. L'actionneur 66 tourne et ses parties terminales enfoncent les verrous 52 et libèrent les tiroirs. Le conducteur peut alors déplacer le siège de façon classique. Lorsque l'occupant libère la palette, cette dernière est ramenée par le ressort 70 vers la position de repos, placée de façon à permettre une préhension commode.

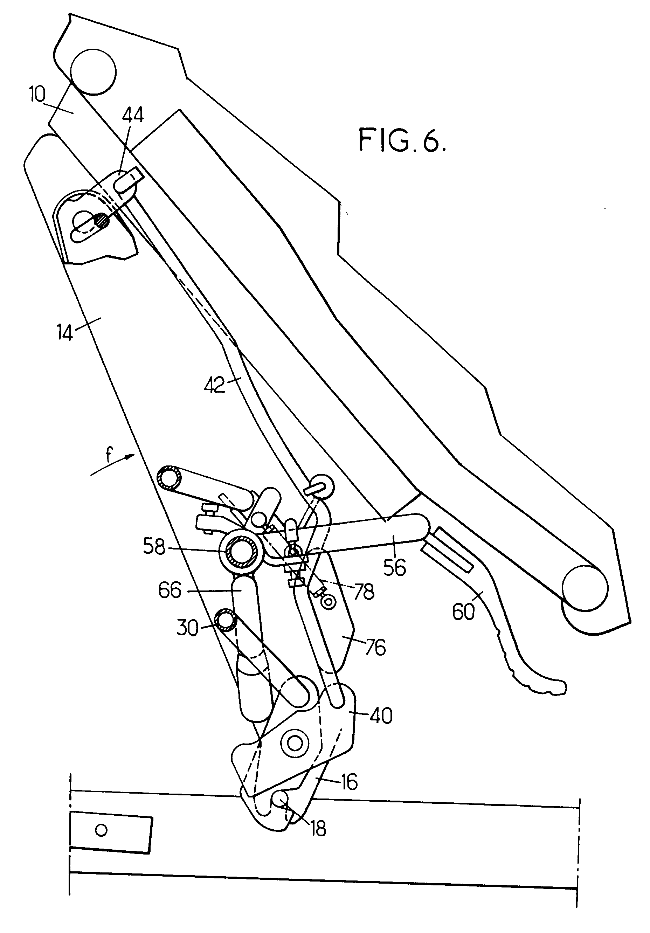

Lorsque l'utilisateur veut faire basculer le siège autour des pieds avant, il désarme les verrous 32. Cette opération peut s'effectuer par traction sur la boucle de la sangle ou si une telle tringlerie de commande est prévue par basculement des manettes 74 placées de part et d'autre de l'assise du siège. Le siège peut alors être basculé dans le sens indiqué par la flèche f sur la figure 6.

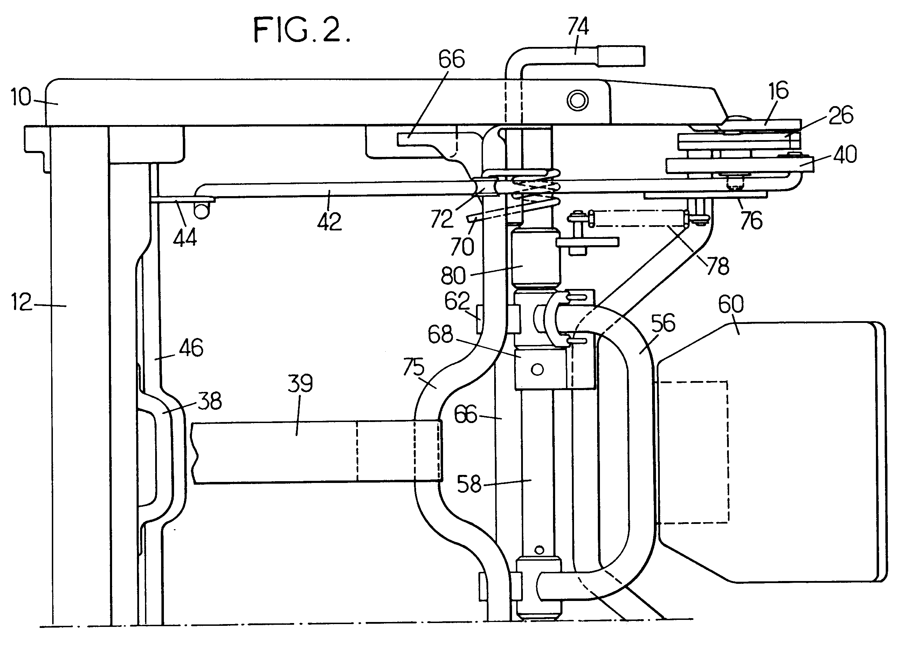

Une tringlerie destinée à escamoter l'actionneur 66 par pivotement autour de l'entretoise 58 comporte un gousset 76 fixé à la biellette 42, par exemple par soudage. Le gousset 76 est relié par un ressort de traction 78 à un doigt prolongeant une bague 80 (figure 2) montée rotative sur l'entretoise. L'actionneur 66 tourne sur l'entretoise par l'intermédiaire de ses bagues.

Lorsque l'assise est basculée vers l'avant, le ressort 78 se détend d'abord. Ensuite il entraîne la bague 80 en rotation dans un sens provoquant l'escamotage de l'actionneur 66.

Lorsque l'assise est basculée vers l'arrière pour la ramener en position d'utilisation, le ressort 78 excerce sur l'actionneur 66 une force qui le ramène dans la position où il est montré en traits pleins sur la figure 6, en appui contre les vis de réglage 64.

Les pieds arrière sont de leur côté escamotés par la poussée exercée par la biellette 42. Au repos, cette biellette, soumise à l'action du ressort 71, maintient les pieds arrière en appui contre les butées 25. Lorsque le siège est basculé vers l'avant, le levier 40 reste en appui sur la glissière et la biellette 42 provoque alors le basculement des pieds arrière dans un sens qui tend à les escamoter entre les flasques.

## Revendications

1. Siège comportant une assise munie de pieds avant (16) et de pieds arrière (20) qui sont destinés à prendre appui sur des doigts ou anneaux transversaux (18,22) portés par le plancher et qui sont muni de verrous désarmables (26,32) d'accrochage sur les doigts ou anneaux, caractérisé en ce que les doigts ou anneaux (18,22) sont fixés à un élément mobile monté coulissant dans des glissières longitudinales (50) fixées au plancher et en ce que l'élément mobile contient des moyens (52) de retenue longitudinale de cet élément sur les glissières, lesdits moyens étant dégageables par action sur des moyens de commande (56,60) prévus sur le siège.

2. Siège suivant la revendication 1, caractérisé en ce que les moyens de commande sont constitués par une tringlerie ayant un arceau (56) accessible sous la partie avant de l'assise et terminé par un actionneur (66) agissant sur les moyens de retenue longitudinale pour les dégager.

3. Siège selon la revendication 2, caractérisé en ce que le point d'action de l'actionneur (66) sur les moyens de retenue est au milieu de l'intervalle entre les doigts avant et arrière (18,22).

4. Siège selon la revendication 2 ou 3, caractérisé en ce que les moyens de retenue sont constitués par au moins un verrou (52) monté basculant sur l'élément mobile et repoussé élastiquement vers une position d'engagement dans des encoches de la glissière respective.

5. Siège selon la revendication 2, 3 ou 4, caractérisé en ce que l'élément mobile comporte deux tiroirs (48) coulissant chacun sur une glissière fixe.

6. Siège selon l'une quelconque des revendications précédentes, caractérisé en ce que les verrous (32) des pieds arrière sont désarmables manuellement, indépendamment de ceux des pieds avant.

7. Siège selon l'une quelconque des revendications précédentes, caractérisé en ce qu'il comporte une tringlerie (40,42) pour faire automatiquement tourner les pieds arrière et/ou les moyens de commande dans un sens qui les escamote au moins partiellement dans l'encombrement de l'assise lors du basculement vers l'avant et qui les ramène en position active lors du retour de l'assise vers sa position d'utilisation normale.

8. Siège selon la revendication 7, caractérisé en ce que l'actionneur étant constitué par un organe muni de bagues (80) tournant sur l'entretoise transversale (66) de l'assise, ladite tringlerie comporte au moins un levier (40) articulé sur un pied avant (26) et maintenu en appui contre la glissière correspondante aux éléments mobiles, des moyens (76,42) montés rotatifs sur ledit levier et au moins un ressort (78) reliant un doigt prolongeant l'une desdites bagues (80) auxdits moyens montés rotatifs (76,42).

9. Siège selon la revendication 8, caractérisé en ce que la tringlerie pour faire automatiquement tourner les pieds arrière comporte lesdits moyens montés rotatifs, qui relient alors ledit levier (40) à une patte (44) d'un au moins des pieds arrière.

10. Siège selon la revendication 7 ou 8, caractérisé en ce que lesdits moyens montés rotatifs comportent une bielle (42) reliant ledit levier à au moins un des pieds arrière et un ressort de rappel (71) exerçant une force tendant à rapprocher la biellette de l'entretoise.

## Claims

1. A seat comprising a base plate having front supports (16) and rear supports (20) which are adapted to bear on transverse fingers or rings (18, 22) supported by the floor and have disengageable latches (26, 32) for attachment to said fingers or rings, characterised in that said fingers or rings (18,22) are attached to a movable element slidably mounted on longitudinal slides (50) attached to the floor, and which movable element comprises means (52) longitudinally retaining said movable element on the slides, said means being disengagable by acting on control means (56, 60) provided on the seat.

2. A seat according to Claim 1, characterised in that the control means are formed by a linkage having a loop (56) accessible under the front portion of the base plate and terminating in an actuator (66) acting on the longitudinal retaining means for their disengagement.

3. A seat according to Claim 2, characterised in that the point at which the actuator (66) acts on the retaining means is at the centre of the gap between the front and rear fingers (18, 22).

4. A seat according to Claims 2 or 3, characterised in that the retaining means are formed by at least one latch (32) which is tiltably mounted on the moving element and is resiliently biased towards a position of engagement in notches in the respective slide.

5. A seat according to Claims 2, 3 or 4, characterised in that the movable element comprises two sliders (48) which each slide on a fixed slide.

6. A seat according to any of the preceding claims, characterised in that the latch (32) of the rear supports can be manually disengaged independently of the bolts of the front supports.

7. A seat according to any of the preceding claims characterised in that it comprises a linkage (40, 42) to automatically rotate the rear supports and/or the control means in a direction which withdraws them at least partially into the space occupied by the base plate during forward tilting and which returns them to the operative position when the base plate returns to its normal position of use.

8. A seat according to Claim 7, characterised in that the actuator is formed by a member having collars (80) rotating on the cross strut (66) of the base plate, said linkage comprising at least one lever (40) articulated to a front support (26) and retained bearing against the slide corresponding to the movable elements, while means (76, 42) rotatably mounted on said lever and at least one spring (78) connects a finger, which extends from one of said collars (80), to said rotatably mounted means (76, 42).

9. A seat according to Claim 8, characterised in that linkage for automatically rotating the rear supports comprises said rotatably mounted means, which in that case connects said lever (40) to a lug (44) of at least one of the rear supports.

10. A seat according to Claims 7 or 8, characterised in that said rotatably mounted means comprise a connecting rod (42), which connects said lever to at least one of the rear supports, and a return spring (71) which exerts a force tending to move the connecting rod towards the strut.

## Patentansprüche

1. Sitz mit einem Unterbau, der mit vorderen Füßen (16) und hinteren Füßen (20) versehen ist, die bestimmt sind, sich auf vom Boden getragenen transversalen Zapfen oder Ringen (18,22) abzustützen, und die mit entsicherbaren Riegeln (26,32) zum Ankuppeln an die Zapfen oder Ringe versehen sind,
dadurch gekennzeichnet,
daß die Zapfen oder Ringe (18,22) an einem beweglichen Element befestigt sind, welches in am Boden befestigten Längsgleitschienen (50) verschiebbar angeordnet ist, und daß das bewegliche Element Mittel (52) zum Zurückhalten dieses Elements in Längsrichtung auf den Gleitschienen aufweist, wobei die Mittel durch Betätigung von auf dem Sitz vorgesehenen Steuermitteln (56,60) außer Eingriff bringbar sind.

2. Sitz nach Anspruch 1,
dadurch gekennzeichnet,
daß die Steuermittel von einem Gestänge gebildet sind, welches einen Bogen (56) aufweist, der unter dem Bereich vor dem Unterbau zugänglich ist und der von einem Betätigungselement (66) begrenzt wird, welches auf die längsgerichteten Rückhaltemittel zum Außereingriffbringen derselben einwirkt.

3. Sitz nach Anspruch 2,
dadurch gekennzeichnet,
daß der Betätigungspunkt des Betätigungselementes (66) auf die Rückhaltemittel sich im Bereich des Zwischenraums zwischen den vorderen und hinteren Zapfen (18,22) befindet.

4. Sitz nach Anspruch 2 oder 3,
dadurch gekennzeichnet,
daß die Rückhaltemittel von wenigstens einem Riegel (52) gebildet sind, welcher kippbar auf dem beweglichen Element angeordnet und federnd zurückdrückbar gegen eine Eingriffsposition in die Nuten der jeweiligen Gleitschiene ist.

5. Sitz nach Anspruch 2, 3 oder 4,
dadurch gekennzeichnet,
daß das bewegliche Element zwei Schieber (48) aufweist, die jeweils auf einer festen Gleitschiene gleiten.

6. Sitz nach irgendeinem der vorangehenden Ansprüche,
dadurch gekennzeichnet,
daß die Riegel (32) der hinteren Füße manuell entsicherbar sind, unabhängig von denen der vorderen Füße.

7. Sitz nach irgendeinem der vorangehenden Ansprüche,
dadurch gekennzeichnet,
daß dieser ein Gestänge (40,42) zum automatischen Drehenlassen der hinteren Füße und/oder Mittel zur Steuerung in einem Sinne aufweist, welcher diese wenigstens bereichsweise in den Stauraum des Unterbaus während der Auslenkung nach vorne versenkt und welcher diese in einer aktiven Position während der Rückkehr des Unterbaus in seine normale Gebrauchsposition hält.

8. Sitz nach Anspruch 7,
dadurch gekennzeichnet,
daß das Betätigungselement von einem mit einer Buchse (80) versehenen Organ gebildet ist, welche sich auf der transversalen Querverstrebung (66) des Unterbaus dreht, wobei das Gestänge wenigstens einen Hebel (40) aufweist, der am vorderen Fuß (26) angelenkt ist und in Abstützung gegen die entsprechende Gleitschiene mit den beweglichen Elementen gehalten ist, wobei Mittel (76,42) drehbar auf diesem Hebel angeordnet sind und wenigstens eine Feder (78) einen die eine der beiden Buchsen (80) verlängernden Zapfen mit den drehbar angeordneten Mitteln (76,42) verbindet.

9. Sitz nach Anspruch 8,
dadurch gekennzeichnet,
daß das Gestänge zum automatischen Drehenlassen der hinteren Füße die besagten drehbar angeordneten Mittel aufweist, welche dann den Hebel (40) mit einer Klaue (44) eines wenigstens der hinteren Füße verbindet.

10. Sitz nach Anspruch 7 oder 8,
dadurch gekennzeichnet,
daß die besagten drehbar angeordneten Mittel eine Kurbelstange (42), welche den Hebel mit wenigstens einem der hinteren Füße verbindet, und eine Rückstellfeder (71) aufweisen, die eine Kraft zum Zurückziehen der Kurbelstange der Querverstrebung ausübt.
